Europäisches Patentamt

European Patent Office

Office européen des brevets

(11) Veröffentlichungsnummer: **0 312 928**
**A1**

(19)

## (12) EUROPÄISCHE PATENTANMELDUNG

(21) Anmeldenummer: **88117103.7**

(22) Anmeldetag: **14.10.88**

(51) Int. Cl.⁴: **C08F 297/04 , C08G 81/02**

(30) Priorität: **20.10.87 DE 3735403**

(43) Veröffentlichungstag der Anmeldung:
**26.04.89 Patentblatt 89/17**

(84) Benannte Vertragsstaaten:
**BE DE FR GB IT NL**

(71) Anmelder: **BASF Aktiengesellschaft**
**Carl-Bosch-Strasse 38**
**D-6700 Ludwigshafen(DE)**

(72) Erfinder: **Bronstert, Klaus, Dr.**
**Gartenstrasse 26**
**D-6719 Calsberg(DE)**
Erfinder: **Walter, Hans-Michael, Dr.**
**Haagweg 6**
**D-6701 Ruppertsberg(DE)**
Erfinder: **Wagner, Daniel, Dr.**
**Prof. Dillinger-Weg 44**
**D-6702 Bad Duerkheim(DE)**

(54) **Verzweigte Copolymerisate und Verfahren zu ihrer Herstellung.**

(57) Sternförmig verzweigte, ggf. hydrierte Copolymerisate aus vinylaromatischen Kohlenwasserstoffen und konjugierten Dienen, hergestellt durch anionische Lösungspolymerisation mittels alkalimetallorganischer Initiatoren und anschließender Kupplung mit einem polyfunktionellen Kopplungsmittel, wobei sie ein vernetztes Zentrum aufweisen, das selbst ein Copolymerisat aus polyvinylaromatischen Kohlenwasserstoffen und monovinylaromatischen Kohlenwasserstoffen darstellt, wobei das Gewichtsverhältnis von monovinylaromatischem Kohlenwasserstoff zu polyvinylaromatischem Kohlenwasserstoff größer als oder gleich 7:1 und kleiner als 60:1 ist, sowie ein Verfahren zur Herstellung sternförmig verzweigter Copolymerisate, wobei nach praktisch vollständigem Umsatz der Monomeren die erhaltenen linearen Copolymerisate mit aktiven, endständigen Lithium-Kohlenstoff-Bindungen unter Zusatz einer Mischung aus monovinylaromatischem Kohlenwasserstoff und polyvinylaromatischem Kohlenwasserstoff gekuppelt werden und wobei das Gewichtsverhältnis von monovinylaromatischem Kohlenwasserstoff zu polyvinylaromatischem Kohlenwasserstoff größer als oder gleich 7:1 und kleiner als 60:1 ist und diese Mischung kontinuierlich oder in mehreren Teilmengen über einen längeren Zeitraum zudosiert wird.

EP 0 312 928 A1

## Verzweigte Copolymerisate und Verfahren zu ihrer Herstellung

Die Erfindung betrifft sternförmig verzweigte Copolymerisate aus vinylaromatischen Kohlenwasserstoffen und konjugierten Dienen, welche hergestellt sind durch anionische Lösungspolymerisation der Monomeren mittels alkalimetallorganischer Initiatoren und anschließender Kupplung mit einem polyfunktionellen Kopplungsmittel und ein Verfahren zur Herstellung der sternförmig verzweigten Copolymerisate.

Unter geeigneten Bedingungen und mit den geeigneten Monomeren können nach bekannten anionischen Polymerisationsverfahren "lebende" Polymere hergestellt werden, die über geeignete Umsetzungen modifiziert werden können (vgl. M. Szwarc: "Living Polymers and Mechanisms of Anionic Polymerizations" in Advances in Polymer Science 49, Springer Verlag [1983]).

Eine der meist untersuchten Umsetzungen ist die Kupplungsreaktion, worunter man die hauptvalenzmäßige Verknüpfung von zwei oder mehreren Polymersegmenten durch ein Kupplungsreagens versteht, wobei Polymere der Molmasse m(PM) entstehen, wobei PM die Molmasse des linearen Polymersegments und m die Funktionalität des Kupplungsreagens bedeutet.

Kupplungsreaktionen stellen eine einfache Methode dar, die Eigenschaften von Polymeren nachhaltig zu beeinflussen. So ist bekannt, daß z.B. im Fall der Dienpolymerisation durch eine Kupplungsreaktion die Mooneyviskosität erhöht wird, der kalte Fluß reduziert und die Molmassenverteilung in der gewünschten Weise modifiziert werden kann.

Es ist weiterhin bekannt, daß man durch Polymerisation von vinylaromatischen Kohlenwasserstoffen und konjugierten Dienen mit organischen Metallinitiatoren je nach Wahl des Initiators und der Verfahrensweise Blockcopolymerisate oder Copolymerisate mit statistischer Verteilung der Comonomeren, erhalten kann (J. Appl. Polym. Sci. 22, [1978] Seiten 2007-2013).

So können außer den jeweiligen "lebenden" Homopolymerisaten auch die Copolymerisate und die bekannten Blockcopolymerisate von Vinylaromaten und Dienen über multifunktionelle, reaktionsfähige Verbindungen miteinander gekuppelt werden.

In der technischen Literatur werden die verschiedensten Beispiele für Kupplungsreagentien beschrieben (Rubber Chem. and Techn. 49, (5), 1305 [1976].

Aus der DE-B-1 128 666 ist es bekannt, konjugierte Diene in Gegenwart eines lithiumorganischen Initiators und Divinylbenzol (DVB) zu polymerisieren. Da das DVB bereits während der Polymerisation des Butadiens zugesetzt wurde (vorzugsweise 0,01 bis 1 % bezogen auf das Gewicht des Monomeren), entstanden Copolymerisate mit statistischer Verteilung von Butadien und DVB.

In der DE-B-1 520 550 wird erstmals die Zugabe von DVB nach praktisch beendeter Polymerisation beschrieben, die zu einer Verringerung des Kaltflusses der entstandenen, verzweigten Dienpolymerisate führt.

Weitere Beispiele für die Kupplung von anionisch hergestellten "lebenden" Polymeren mit polyvinylaromatischen Kupplungsmitteln finden sich in der EP-A-83 574 und der DE-A-27 00 294 bzw. der US-PS 4 116 917.

Die Verwendung von polyvinylaromatischen Kohlenwasserstoffen (wie z.B. Divinylbenzol) zur Kupplung lebender Polymerer stellt insofern einen Sonderfall dar, als diese Kupplungsmittel selbst Monomere darstellen.

Bei dieser Kupplung durch Copolymerisation entstehen verzweigte Polymerisate, die ein dichtes Zentrum oder einen Kern aus vernetztem polymerem Polyalkenylkupplungsmittel und eine Anzahl von Armen aus praktisch geradkettigen Polymeren aufweisen, die sich sternförmig vom Kern aus nach außen erstrecken.

Die Anzahl dieser Arme kann beträchtlich variieren, doch beträgt ihre Anzahl typischerweise 3-25 und insbesondere 8-15. Sternförmige strukturierte Homopolymere können durch die Formel

$$A - X - (A)_n$$

und sternförmig strukturierte Copolymere durch die Formel

$$(A-B) - X - (B-A)_n$$

wiedergegeben werden, in welcher n eine ganze Zahl bedeutet, die üblicherweise einen Wert zwischen 2 und 24 hat, während X der Kern des polymerisierten polyvinylaromatischen Kupplungsmittels ist. A-B kann ein Blockcopolymer, ein statistisches Copolymer oder ein sogenanntes "tapered" Blockcopolymer sein, wobei die Strukturformel A-B nicht beschränkend bezüglich der Anordnung der einzelnen Monomereinheiten in dem Copolymerisat aufgefaßt werden soll.

Die wie auch immer geartete, durch eine Kupplungsreaktion gewünschte Eigenschaftsverbesserung der Polymerisate hängt im wesentlichen davon ab, daß es gelingt, eine möglichst hohe Kupplungsausbeute zu erzielen, d.h. den Anteil an nicht gekuppeltem Polymeren so gering wie möglich zu halten.

Eine hohe Kupplungsausbeute ist insbesondere bei der Darstellung thermoplastisch-elastomerer Blockcopolymerisate des Typs (A-B-A) wichtig. So ist dem Fachmann bekannt, daß selbst geringe Anteile an ungekuppelten Zweiblocks der allgemeinen Formel (A-1/2 B) die Zugfestigkeit der gekuppelten Blockcopolymerisate reduzieren.

Bei allen bekannten Verfahren ist es daher erforderlich, das molare Verhältnis von polyvinylaromatischem Kohlenwasserstoff zum lithiumcarbanionischen Kettenende so zu wählen, daß mindestens eine Vinylgruppe des Kupplungsmittels pro reaktive carbanionische Endgruppe vorhanden ist. Im Fall des Divinylbenzols bedeutet das theoretisch ein Verhältnis DVB/Li von mindestens 0,5 mol/mol.

Mit steigendem DVB/Li-Verhältnis entstehen verzweigte Polymere mit steigenden Sternastzahlen. Die Sternastzahl ist aus sterischen Gründen nach oben begrenzt, so daß eine Erhöhung des DVB/Li Verhältnisses (>1:10) keinen Einfluß mehr auf die Kopplungsausbeute und die Sternastzahl ausübt.

Häufig wird Divinylbenzol technischer Qualität zum Kuppeln lebender Polymerisate eingesetzt (vgl. US-A-3,855,189). Es enthält gewöhnlich nur etwa 55 Gew.% DVB, als Mischung seiner Isomeren und als wesentliche Nebenbestandteile Ethylvinylbenzol und Diethylbenzol sowie weitere Verunreinigungen, die u.a. auch um Abbruch lebender Ketten beitragen können.

Aus diesem Grunde ist es wünschenswert, die Menge an technischen Divinylbenzol als Kupplungsmittel einerseits so weit zu reduzieren, daß kein Abbruch durch eingetragene Verunreinigungen auftritt, andererseits gerade so viel einzusetzen, daß eine möglichst hohe Kupplungsausbeute erzielt wird.

Dazu wird z.B. im US-Patent 3,855,189 vorgeschlagen, nach beendeter Polymerisation und unmittelbar vor der Kupplung polare Verbindungen wie z.B. Ether, Thioether oder tertiäre Amine zuzusetzen, um damit die Effektivität der Kupplung mit DVB zu erhöhen.

In der EP-A-83 576 wird vorgeschlagen die Kupplungsausbeute bei der Herstellung von bestimmten thermoplastisch elastomeren Blockcopolymerisaten dadurch zu erhöhen und Abbruch zu vermeiden, daß das Kupplungsmittel Divinylbenzol in Mischung mit einem Dienkohlenwasserstoff wie z.B. 1,3-Butadien mit einem Polystyryllithiumprecursor in Kontakt gebracht wird.

Kupplungsausbeuten von 90 % und mehr bei der Verwendung von technischem Divinylbenzol als Kupplungsmittel werden jedoch nur erzielt, wenn ein Verhältnis DVB/Li mindestens 4:1 gewählt wird (vgl. Rubber Chem. and Techn. 51, 415 [1978]). In diesem Fall entstehen aber bereits verzweigte Copolymerisate mit einer sehr hohen Sternastzahl.

Derartig hochverzweigte, gekuppelte Polymerisate, die einen sehr dicht vernetzten Kern aus polymerisierten polyvinylaromatischen Verbindungen besitzen, weisen einige dem Fachmann bekannte Nachteile auf:

1. Die Hydrierung von hochverzweigten Homopolymerisaten aus konjugierten Dienen oder Copolymerisaten aus vinylaromatischen Kohlenwasserstoffen und Dienen erfordert beträchtlich längere Hydrierzeiten und schärfere Bedingungen als bei ungekuppelten bzw. gekuppelten Polymerisaten mit Sternastzahlen $\approx 4$, die durch Umsetzen z.B. mit $SiCl_4$ erhalten werden können.

2. In vielen Fällen ist es erwünscht den "lebenden" Charakter der entstandenen gekuppelten Polymerisate, der bei der Umsetzung mit polyvinylaromatischen Kupplungsmitteln weitgehend erhalten bleibt, sich dadurch zu Nutze zu machen, daß man weitere modifizierende Umsetzungen ausführt. Dies kann durch Funktionalisieren mit entsprechenden Reagentien erfolgen.

Desweiteren ist es vielfach erwünscht, auf das gekuppelte Polymerisat eine weitere Monomermenge aufzupolymerisieren. In diesem Fall wachsen neue Polymerketten von den reaktiven Zentren im Kern des gekuppelten Polymerisats aus nach außen.

Die Darstellung von neuartigen Copolymeren nach den bekannten Verfahren wird jedoch dadurch erschwert und in der Regel fast undurchführbar, daß die noch vorhandenen reaktiven lithiumcarbanionischen Gruppen auf Grund der dichten Vernetzung des Kerns für weitere Reaktionen sterisch abgeschirmt und daher unzugänglich sind.

3. Die Eigenschaftsqualitäten gekuppelter Polymerisate zeigen in vielen Fällen ein Optimum bei mittleren Sternastzahlen von 4-8 Polymerarmen, bei möglichst effizienter Kupplungsausbeute, worunter hier ein möglichst geringer Gehalt an ungekuppeltem Material verstanden wird.

In der EP-A-82 574 werden polyvinylaromatische Kupplungsmittel der allgemeinen Formel $A\text{-}(CH=CH_2)_x$ eingesetzt, in der A ein ggf. substituierter aromatischer Ring und X eine gerade Zahl größer als 2 bedeutet. m-Divinylbenzol, reines Divinylbenzol als Gemisch seiner Isomere oder Divinylbenzol technischer Qualität werden als Kupplungsmittel bevorzugt. Es wird im Text darauf verwiesen, daß Divinylbenzol technischer Qualität auch geringe Gehalte an anderen Monomeren z.B. Styrol oder Ethylstyrol enthalten kann, bzw. das als Kupplungsmittel ein Gemisch aus Divinylbenzol mit kleineren Mengen an anderen Monomeren angewendet werden kannn.

Dem unvoreingenommenen Fachmann wird durch diese Offenbarung nicht nahegelegt, größere Mengen an monovinylaromatischen Kohlenwasserstoffen in Mischung mit dem polyvinylaromatischen Kupplungsmittel einzusetzen, noch wird aus der vorbeschriebenen Literatur ersichtlich, daß in der hier beanspruchten erfindungsgemäßen Ausführungsform für die Kupplungsreaktion bzw. für weitere Umsetzungen sowie für die Produkteigenschaften ein technischer Vorteil liegen könnte.

Aufgabe der vorliegenden Erfindung war es daher ein sternförmig verzweigtes Copolymerisat aufzufinden und ein Verfahren zur Kupplung von "lebenden" Polymeren mit polyvinylaromatischen Kupplungsmitteln zu entwickeln, das

1. eine hohe Kopplungsausbeute von 80 % und mehr bei einem möglichst niedrigen DVB/Li-Verhältnis sicherstellt;

2. die Sternastzahl n im gekoppelten Polymerisat in der Weise nach oben begrenzt, daß vorzugsweise n größer als 2 jedoch kleiner als 10 insbesondere n größer als 4 kleiner als 8 ist;

3. das Aufpolymerisieren weiterer Monomerer auf das gekuppelte Polymerisat sowie Funktionalisierungen vereinfacht;

4. die Hydrierzeiten gekuppelter Polymerisate mit Dienanteilen deutlich reduziert.

Diese Aufgabe wurde durch sternförmig verzweigte Copolymerisate aus vinylaromatischen Kohlenwasserstoffen und konjugierten Dienen gelöst, welche hergestellt sind durch anionische Lösungspolymerisation der Monomeren mittels alkalimetallorganischer Initiatoren und anschließende Kupplung mit einem polyvinylaromatischen Kohlenwasserstoff als polyfunktionellem Kupplungsmittel, wobei als Kupplungsmittel ein Gemisch aus polyvinylaromatischem Kohlenwasserstoff und einem monovinylaromatischen Kohlenwasserstoff verwendet worden ist. Das Gewichtsverhältnis von monovinylaromatischem Kohlenwasserstoff zu polyvinylaromatischem Kohlenwasserstoff in diesem Gemisch ist erfindungsgemäß größer als oder gleich 7:1 und kleiner als 60:1.

Bevorzugt ist das Gewichtsverhältnis größer oder gleich 10:1 und kleiner 40:1; besonders günstig sind verzweigte Copolymerisate, die aus diesen Copolymeren durch die partielle oder vollständige Hydrierung erhalten werden.

Erfindungsgemäß erhält man die sternförmig verzweigten Copolymerisate, indem man nach praktisch vollständigem Umsatz der Monomeren die erhaltenen linearen Copolymerisate mit aktiven, endständigen Lithium-Kohlenstoff-Bindungen unter Zusatz einer Mischung aus monovinylaromatischem Kohlenwasserstoff und polyvinylaromatischem Kohlenwasserstoff kuppelt, wobei das Gewichtsverhältnis von monovinylaromatischem Kohlenwasserstoff zu polyvinylaromatischem Kohlenwasserstoff größer als oder gleich 7:1 bzw. 10:1 und kleiner als 60:1 bzw. 40:1 ist und diese Mischung ggf. verdünnt in einem inerten Lösungsmittel über einen längeren Zeitraum kontinuierlich oder in mehreren Teilmengen zudosiert.

Unter Homo-, Co- und Blockcopolymerisaten aus Vinylaromaten und/oder Dienen sind die bekannten Polymerisate dieser Art zu verstehen, die anionisch z.B. mit Hilfe von alkalimetallorganischen Initiatoren aus den entsprechenden Monomeren erhalten werden können. Derartige Verfahren sind so bekannt, daß sie hier nicht weiter erörtert werden müssen (vgl. z.B. GB-Patent 1 444 680 oder Journal of Applied Polymer Science, 22, [1978], Seiten 2007 bis 2913.)

Als Vinylaromaten kommen insbesondere Styrol, die verschiedenen Alkylstyrole oder Vinylnaphthalin, als Diene Butadien, Isopren, 2,3-Dimethylbutadien, Piperylen, Phenylbutadien oder andere anionisch polymerisierbare konjugierte $C_4$- bis $C_{12}$-Diene in Betracht. Außer den jeweiligen Homopolymerisaten kommen auch die Copolymerisate und die bekannten Blockcopolymerisate von Vinylaromaten und Dienen in Frage, wobei je nach Wahl des Initiators und Lösungsmittels Blockcopolymerisate mit statistischer Verteilung der Monomeren erhalten werden können.

Als Initiatoren dienen die bekannten Monolithiumkohlenwasserstoffe der allgemeinen Formel RLi, worin R einen aliphatischen, cycloaliphatiscchen, aromatischen oder gemischt aliphatisch-aromatischen Kohlenwasserstoffrest darstellen. Der Kohlenwasserstoffrest kann 1 bis 12 Kohlenstoffatome besitzen. Als Beispiele für die erfindungsgemäß einzusetzenden Lithiumkohlenwasserstoffinitiatoren seien genannt: Methyllithium, Ethyllithium, (n-, sec.-, tert.-)Butyllithium, Isopropyllithium; Cyclohexyllithium; Phenyllithium oder p-Toloyllithium. Vorzugsweise werden die Monolithiumalkylverbindungen mit 2 bis 6 Kohlenstoffatomen in der Alkylgruppe eingesetzt, wobei n-Butyllithium und sec.-Butyllithium besonders bevorzugt sind.

Die Polymerisation der Monomeren wird ggf. in Lösung in einem inerten organischen Kohlenwasserstofflösungsmittel durchgeführt. Geeignete Kohlenwasserstofflösungsmittel sind aliphatische, cycloaliphatische oder aromatische Kohlenwasserstoffe, die unter Reaktionsbedingungen flüssig sind und vorzugsweise 4 bis 12 Kohlenstoffatome enthalten. Als Lösungsmittel kommen beispielsweise in Betracht Isobutan, n-Pentan, Isooctan, Cyclopentan, Cyclohexan, Cycloheptan, Benzol, Toluol, die Xylole und andere. Ebenso können Gemische dieser Lösungsmittel eingesetzt werden. Ferner ist es möglich, die Polymerisation in Gegenwart geringer Mengen, im allgemeinen $10^{-3}$ bis 5 Gew.%, bezogen auf das Gesamtlösungsmittel, an Ethern, wie etwa Tetrahydrofuran, Dimethoxyethan, Phenylmethylether und anderen, durchzuführen, wodurch in bekannter Weise die Polymerisationsgeschwindigkeit, die Konfiguration des Butadienpolymerisatsegments sowie auch der statistische Einbau von monovinylaromatischen Monomeren in Butadienpolymerisatsegmenten beeinflußt werden kann. Die Konzentration der Monomeren in der Reaktionslösung ist nicht kritisch und kann so eingestellt werden, daß jede gewünschte Vorrichtung für die Polymerisation verwendet werden kann. Üblicherweise wird in 10 bis 30 gew.%igen Lösungen der inerten Lösungsmittel polymerisiert.

Die Polymerisation erfolgt unter den für die anionische Polymerisation mit lithiumorganischen Verbindungen üblichen Bedingungen, wie z.B. in Inertgasatmosphäre unter Luft- und Feuchtigkeitsausschluß. Die Polymerisationstemperatur kann zwischen 0 und 120 °C liegen und wird vorzugsweise zwischen 40 und 80 °C gehalten.

Die Polymerisation wird bis zur praktisch vollständigen Umsetzung der eingesetzten Monomeren geführt. Man erhält so eine Lösung von lebenden, linearen Polymeren mit aktiven, endständigen Lithiumkohlenstoffbindungen, welche zur weiteren Anlagerung von Monomeren fähig sind.

Die ungekuppelten Polymeren weisen im allgemeinen Durchschnittsmolekulargewichte (Gewichtsmittel $\overline{m}_n$) zwischen 500 und 150 000 auf, ermittelt durch Gelpermeationschromatographie (GPC) und Vergleich mit standardisierten, zur Eichung geeigneten Polymeren (vgl. G. Glöckner, "Polymercharakterisierung durch Flüssigkeitschromatographie", Verlag A. Hüthig, Heidelberg, 1982). Gemessen wird üblicherweise in 0,25 gew.%iger Tetrahydrofuranlösung bei 23 °C und einer Durchflußgeschwindigkeit von 1,2 ml/min.). Durch mehrfache Initiatordosierung können die ungekuppelten Polymere auch eine polymodale Molekulargewichtsverteilung besitzen.

Die in dieser Verfahrensstufe gebildeten Living-Polymerisate werden nun mit einer Mischung aus einem Polyalkenyl-Kupplungsmittel und einem monovinylaromaitschen Kohlenwasserstoff weiter umgesetzt.

Hierfür geeignete Polyalkenyl-Kupplungsmittel sind bekannt. Es handelt sich dabei üblicherweise um Verbindungen mit wenigstens 2 nicht konjugierten Alkenylgruppen. Solche Gruppen befinden sich üblicherweise an der gleichen oder auch an verschiedenen elektronnenabziehenden Gruppen, beispielsweise einem aromatischen Kern. Derartige Verbindungen haben die Eigenschaft, daß mindestens 2 der Alkenylgruppen zu einer unabhängigen Reaktion mit unterschiedlichen Living-Polymerisaten geeignet sind. Die betreffenden Polyalkenyl-Kupplungsmittel können in reiner Form oder in technischer Qualität verwendet werden. Bevorzugt werden im Rahmen der Erfindung als Kupplungsmittel polyalkenylaromatische Verbindungen und insbesondere polyvinylaromatische Verbindungen. Beispiele hierfür sind aromatische Verbindungen wie Benzol, Toluol, Xylol, Anthracen, Naphthalin und Duren, welche mindestens 2 Alkenylgruppen als Substituenten aufweisen, die vorzugsweise direkt an den betreffenden aromatischen Kern gebunden sind. Beispiele für geeignete Polyvinylbenzole sind Divinyl-, Trivinyl- und Tetravinylbenzole, Divinyl-, Trivinyl- und Tetravinyl o-, m- und p-Xylole, ferner Divinylnaphthalin, Divinylethylbenzol, Divinylbiphenyl, Diisobutenylbenzol, Diisopropenylbenzol und Diisopropenylbiphenyl. Besonders bevorzugte aromatische Verbindungen dieses Typs werden durch die folgende Strukturformel wiedergegeben: $A-(CH=CH_2)_x$, in welcher A ein gegebenenfalls substituierter aromatischer Kern ist und x eine ganze Zahl von mindestens 2 bedeutet. Im Rahmen der Erfindung werden bevorzugt Divinylbenzol und insbesondere Methadivinylbenzol als aromatische Verbindung eingesetzt. Dabei kann reines Divinylbenzol oder ein Divinylbenzol von technischem Reinheitsgrad verwendet werden.

Der monovinylaromatische Kohlenwasserstoff, der in Mischung mit dem polyvinylaromatischen Kupplungsmittel erfindungswesentlich in einer Menge von größer oder gleich 7:1 und kleiner 60:1, vorzugsweise größer oder gleich 10:1 und kleiner 40:1 bezogen auf das Gewicht des polyvinylaromatischen Kupplungsmittels eingesetzt wird, kann beispielsweise Styrol, die seitenkettenalkylierten Styrole, wie α-Methylstyrol, und die kernsubstituierten Styrole, wie Vinyltuoluol oder Ethylvinylbenzol sein. Die monovinylaromatischen Verbindungen können dabei allein oder in Mischung mit dem Kopplungsmittel eingesetzt werden. Vorzugsweise wird jedoch Styrol allein als Mischungskomponente verwendet.

Die Mischung soll dem Living-Polymerisat zugesetzt werden, nachdem die Polymerisation der betreffenden monomeren Bestandteile praktisch vollständig abgelaufen ist.

Die Menge des polyvinylaromatischen Kupplungsmittels in der Mischung beträgt vorzugsweise mindestens 0,5 Mol je Mol Living-Polymerisat. Bevorzugt wird das Kupplungsmittel in Mengen von 1,0 bis 3 Mol angewendet. Diese Mischung des Kupplungsmittels und des monovinylaromatischen Kohlenwasserstoffs kann in zwei oder mehr Anteilen zugesetzt werden, doch wird es üblicherweise in der Weise eingesetzt, daß mindestens 80 bis 85 Gew.% des Living-Polymerisats in das verzweigte Polymerisat überführt werden. Dazu ist es erforderlich die Mischung ggf. verdünnt in einem inerten Lösungsmittel über einen längeren Zeitraum in das Reaktionsgefäß einzuspeisen.

Die Kupplung kann in dem gleichen Lösungsmittel wie die Polymerisation des linearen Polymeren vorgenommen werden. Geeignete Lösungsmittel sind bereits vorstehend aufgeführt worden. Die Kupplung kann innerhalb eines weiten Temperaturbereiches durchgeführt werden, beispielsweise bei Temperaturen zwischen 20 und 120°C, wobei Temperaturen zwischen 40°C und 80°C bevorzugt sind. Auch diese Umsetzung wird in einer inerten Atmosphäre, beispielsweise unter einer Schutzschicht aus Stickstoff durchgeführt.

Das in dem Kupplungsschritt gebildete sternförmig verzweigte Polymerisat weist im Gegensatz zu den sternförmig verzweigten Polymerisaten der bekannten Art kein dichtes Zentrum aus vernetzten Polyvinylaromat-Kupplungsmittel auf, sondern ein ausgedehnteres Zentrum aus weitmaschig vernetztem Copolymerisat, das aus monovinylaromatischem und polyvinylaromatischem Kohlenwasserstoff gebildet wird.

Das betreffende sternförmig aufgebaute Living-Polymerisat kann noch mit weiteren Mengen an monomeren Verbindungen umgesetzt werden, beispielsweise den gleichen oder anderen Dienen und/oder monovinylaromatischen Verbindungen des vorstehend erläuterten Typs. Durch eine solche zusätzliche Reaktion wird nicht nur die Anzahl der Polymerketten erhöht, sondern es werden auch sternförmig aufgebaute Living-Polymerisate gebildet, welche mindestens zwei unterschiedliche Arten von Polymerketten aufweisen. beispielsweise kann ein von Polyisopren abgeleitetes sternförmig aufgebautes Living-Polyisopren-Homoppolymerisat auch mit monomerem Styrol umsetzen, wodurch man ein sternförmig aufgebautes Copolymeres erhält, das Ketten oder Arme sowohl aus Polyisopren als auch aus Polystyrol-Homopolymerisat aufweist. Unter dem Ausdruck "unterschiedliche Polymerketten" werden daher entweder Ketten mit unterschiedlichem Molekulargewicht und/oder Ketten mit unterschiedlichem Aufbau verstanden. Diese zusätzliche Polymerisationsreaktion kann unter praktisch den gleichen Bedingungen durchgeführt werden, wie sie vorstehend für den ersten Polymerisationsschritt beschrieben worden sind. Es kann sich bei den zusätzlichen Polymerketten um Homopolymere, Copolymere und dergleichen der vorstehend beschriebenen Art handeln.

Das sternförmig aufgebaute Polymerisat kann ein Molekulargewicht in einem aufweisen, weiten Bereich aufweisen. Üblicherweise entstehen Polymerisate mit Molekulargewichten von 25 000 bis 1 000 000, wobei Polymerisate mit Molekulargewichten im Bereich von 80 000 bis 450 000 besonders bevorzugt sind. Zweckmäßig werden die betreffenden Molekulargewichte dabei ausgedrückt als Spitzen- oder Peak-Molekulargewichte, welche mittels der GPC-Technik unter Bezugnahme auf einem Eichstandard bestimmt worden sind. Weiterhin kann die Charakterisierung der Polymerisate über die Messung der Viskositätszahl nach DIN 53 726 erfolgen.

Derartige sternförmig aufgebaute Polymerisate, welche noch Living-Polymerisate darstellen, können anschließend in an sich bekannter Weise durch Zusatz einer Verbindung, die mit der carbanionischen Endgruppe reagiert, desaktiviert werden. Als derartige Desaktivatoren eignen sich Verbindungen mit einem oder mehreren aktiven Wasserstoffatomen, wie Wasser, Alkohole (z.B. Methanol, Ethanol, Isopropanol und 2-Ethylhexanol) sowie Carbonsäuren, z.B. Essigsäure, oder Verbindungen mit einem aktiven Halogenatom beispielsweise einem Chloratom, wie Benzylchlorid und Chlormethan. Auch Verbindungen mit einer Estergruppe und Kohlendioxid können als Desaktivatoren eingesetzt werden.

Die verzweigten Living-Polymerisate können ebenso mit Reagentien umgesetzt werden, die eine funktionelle Endgruppe in das Polymerisat einführen wie z.B. Ethylenoxid, Ethylensulfid oder Schiff'schen Basen.

Anschließend an die Desaktivierung oder Funktionalisierung und zweckmäßigerweise vor der Isolierung des Produkts aus dem Reaktionsgemisch kann das verzweigte Blockcopolymerisat noch hydriert werden. Die Hydrierung kann dabei selektiv oder nicht selektiv erfolgen und wird normalerweise mit Hilfe von molekularem Wasserstoff und Katalysatoren auf Basis von Metallen oder Metallsalzen der 8. Gruppe des Periodensystems durchgeführt. Dies kann entweder in homogener Phase mit Katalysatoren auf Basis von Salzen, insbesondere den Carboxyaten, Alkoxiden oder Enolaten des Cobalts, Nickels oder Eisens, die mit Metallalkylen, insbesondere Aluminiumalkylen reduziert sind, geschehen, wie es z.B. in der US-A-3 113 986, der DE-B-1 222 260 oder der DE-A-2 013 263 beschrieben ist. Dabei werden unter milden Bedingungen bei einem Wasserstoffdruck zwischen 1 und 100 bar und einer Temperatur zwischen 25 und 150°C die olefinischen Doppelbindungen hydriert. Die Hydrierung kann auch in heterogener Phase mit Nickel oder Platin bei einem Wasserstoffdruck von 20 bis 300 bar und einer Temperatur zwischen 40 und 300°C durchgeführt werden (z.B. nach der DE-B-1 106 961 oder der DE-A-1 595 345). Dabei werden neben den olefinischen Doppelbindungen auch die aromatischen Doppelbindungen hydriert. Wenn die Hydrierung in Lösung erfolgt, wird sie vorzugsweise in demselben Lösungsmittel durchgeführt wie die vorangegangene Polymerisation. Das verzweigte Copolymerisat kann dabei partiell oder vollständig hydriert werden. Vorzugsweise werden, falls hydriert wird, selektiv die olefinischen Doppelbindungen des Polymerisats hydriert, wobei die hydrierten verzweigten Copolymerisat vorzugsweise dann nur noch weniger als 10 % und insbesondere weniger als 3 % olefinische Doppelbindungen enthalten. Zur Hydrierung werden dabei vorzugsweise solche verzweigten Copolmerisate eingesetzt, die in Gegenwart geringer Mengen an Ethern bei der Polymerisation hergestellt worden sind.

Zur Isolierung der Polymeren kann das Polymerisationsgemisch nach bekannten Verfahren wahlweise direkt zur Trockene erhitzt oder mit Wasserdampf behandelt werden, wobei das Lösungsmittel abdestilliert. Es kann gleichfalls in einem Überschuß Nichtlösungsmittel wie z.B. Ethanol gefällt und mechanisch abgetrennt und getrocknet oder durch Extruderentgasung aufgearbeitet werden. Die Aufarbeitung ist nicht Bestandteil der Erfindung.

Die nach dem erfindungsgemäßen Verfahren hergestellten gekuppelten Homo-oder Copolymere können in an sich bekannter Weise mit gebräuchlichen Stabilisatoren. Verstärkungsmaterialien, Füllstoffen und verschiedenen weiteren Zusatzmitteln versetzt werden.

Die nach erfindungsgemäßem Verfahren hergestellten Polymerisate weisen insbesondere folgende Vorteile auf:

1. Zur Erzielung einer hohen Kupplungsausbeute kann die Einsatzmenge an Divinylbenzol drastisch reduziert werden.

**üblich:**                                   **3 - 5 mol DVB/mol Initiator**

**nach erf.gem. Ausführung:**          **1 - 2 mol DVB/mol Initiator**

2. Die nach erf.gem. Ausführung gekuppelten Polymere sind für weitere Umsetzungen (Aufpolymerisieren weiterer Monomerer/Funktionalisierung) wesentlich leichter zugänglich.

3. Die nach erf.gem. Verfahren gekuppelten Polymeren sind in den üblichen Lösungsmitteln vollständig löslich. Im Gegensatz dazu weisen mit DVB gekuppelte Polymerisate der bekannten Art häufig unlösliche, vernetzte Gelanteile auf.

4. Die selektive Hydrierung der olefinischen Doppelbindungen in gekuppelten Copolymerisaten mit Dienanteilen erfordert keine verlängerten Hydrierzeiten oder drastischere Bedingungen. Die nach herkömmlicher Art mit DVB gekuppelten Polymerisate bereiten hingegen Schwierigkeiten.

Die nachstehenden Beispiele dienen der Erläuterung der Erfindung:

Beispiel 1

In einem unter Reinstickstoff mit einer Lösung von n-Butyllithium in Cyclohexan gespülten, thermostatisierbaren 4-Liter-Reaktionsgefäß, das mit Rührer und Thermometer versehen ist, werden 3500 ml Cyclohexan, 7,2 g Tetrahydrofuran und 1 g Styrol vorgelegt. Bei 40° C wird mit einer Injektionsspritze unter gutem Rühren so lange eine 1,4 molare Lösung von sek.-Butyllithium in Cyclohexan zugegeben, bis eine bleibende schwache Gelbfärbung entsteht. Daraufhin werden weitere 10 mmol sek.-Butyllithium zugesetzt. Sodann läßt man eine Mischung aus 40 g Styrol und 160 g Butadien, das durch Abdestillieren von Butyllithium gereinigt wurde, kontinuierlich zulaufen, wobei die Temperatur auf 60° C ansteigt. Nach 90 Minuten ist die Reaktion vollständig abgelaufen. Dem Reaktionsgefäß wird eine Probe entnommen, die in Ethanol ausgefällt, isoliert und getrocknet wird.

Das gebildete lineare Copolymerisat wird wie folgt charakterisiert:

Molekulargewicht ($\overline{M}_w$): 23 000
Viskositätszahl (VZ): 39,0 [ml/g]

Anschließend wird zur Kupplung des gebildeten Living-Polymerisats eine Mischung folgender Zusammensetzung zugegeben:

(10 mmol) $\hat{=}$ 1 Äquivalent Divinylbenzol/Li

7

15 g (0,14 mol) Styrol
gelöst in 100 ml gereinigtem Cyclohexan

Die Zugabe erfolgt bei 60°C mittels einer Dosiervorrichtung mit einer Zulaufgeschwindigkeit von 500 ml/h. Nach vollständiger Zugabe der Mischung läßt man die Reaktion unter gutem Rühren noch weitere 2 Stunden ablaufen.

Anschließend wird das gekuppelte Polymerisat in Ethanol ausgefällt, isoliert und bei 50°C im Hochvakuum über 24 h getrocknet.

Das gekuppelte Copolymerisat wird wie nachstehend charakterisiert:

Viskositätszahl (VZ): 65 [ml/g]
Kupplungsausbeute : 82 %*

|  |  | Anteile im gekuppelten Polymerisat* |
|---|---|---|
| Molekulargewicht (Peakmolgewicht): | 46 000 | 25 % |
| Molekulargewicht ( " ): | 100 000 | 40 % |
| Molekulargewicht ( " ): | 200 000 | 3 % |

\* berechnet über die Peakflächen im GPC-Diagramm

Beispiel 2

Analog Beispiel 1 wird ein lineares Copolymerisat gleicher Zusammensetzung hergestellt, das wie nachstehend charakterisiert wird:

Molekulargewicht ($\overline{M}_w$): 24 000
Viskositätszahl (VZ): 41 [ml/g] Anschließend wird zur Kupplung des gebildeten Living-Polymerisats eine Mischung folgender Zusammensetzung zudosiert:
10 mmol Divinylbenzol ($\hat{=}$ 1 Äquivalent DVB/Li)
40 g (0,38 mol) Styrol
gelöst in 100 ml gereinigtem Cyclohexan

Das gekuppelte Polymerisat wird analog Beispiel 1 aufgearbeitet und wie nachstehend charakterisiert.

Viskositätszahl (VZ): 79 [ml/g]
Kopplungsausbeute : 92 %

|  |  | Anteile im gekuppelten Polymerisat |
|---|---|---|
| Molekulargewicht (Peakmolgewicht): | 50 000 | 30 % |
| Molekulargewicht ( " ): | 100 000 | 50 % |
| Molekulargewicht ( " ): | 200 000 | 5 % |

Beispiel 3

Gemäß Beispiel 1 wird ein lineares Copolymerisat gleicher Zusammensetzung hergestellt, das nachstehend charakterisiert wird.

Molekulargewicht ($\overline{M}_w$): 21 000
Viskositätszahl (VZ): 36,0 [ml/g]

Das gebildete Copolymerisat wird sodann mit einer Mischung aus 10 mmol Divinylbenzol ($\hat{=}$ 1 Äquivalent DVB/Li)
25 g (0,24 mol) Styrol
gelöst in 100 ml Cyclohexan gekuppelt.

Nach der Kupplung wird eine Probe gezogen, die wie nachstehend charakterisiert wird:

Viskositätszahl (VZ): 78,1 [ml/g]
Kopplungsausbeute : 86 %

| | | Anteile im gekuppelten Polymerisat |
|---|---|---|
| Molekulargewicht (Peakmolgewicht): | 42 000 | 25 % |
| Molekulargewicht ( " ): | 85 000 | 45 % |
| Molekulargewicht ( " ): | 200 000 | 5 % |

In einer weiteren Stufe wird auf das gekuppelte Polymerisat eine Mischung aus 40 g Styrol und 160 g Butadien aufpolymerisiert. Die Reaktion wird bei 60°C noch 3 h fortgesetzt. Das gebildete sternförmige Polymerisat wird isoliert und wie nachstehend charakterisiert:

Viskositätszahl (VZ): 140 [ml/g]

| | | Anteile im gekuppelten Polymerisat |
|---|---|---|
| Molekulargewicht (Peakmolgewicht): | 100 000 | 40 % |
| Molekulargewicht ( " ): | 180 000 | 40 % |

Vergleichsversuch A

Zum Vergleich wird nach der Vorschrift des Beispiels 1 ein lineares Copolymerisat gleicher Zusammensetzung hergestellt. Anhand einer isolierten Probe wird das Polymerisat charakterisiert:

Molekulargewicht ($\overline{M}_w$) : 24 000
Viskositätszahl (VZ): 41 [ml/g]

Das gebildete Living-Polymerisat wird ebenfalls gekuppelt, diesmal jedoch mit einer Lösung von 10 mmol Divinylbenzol (= 1 Äquivalent DVB/Li) gelöst im 100 ml Cyclohexan, d.h. ohne Zusatz von Styrol).

Analog Beispiel 1 wird nach 2 h Reaktionszeit eine Probe zur Charakterisierung entnommen:

Viskositätszahl (VZ) : 73 [ml/g]
Kopplungsausbeute : 55 %
Molekulargewichte (Peakmolgewicht) des gekuppelten Polymerisats: 200 000 In einer weiteren Stufe analog Beispiel 3 wird auf das gebildete Living-Polymerisat eine Mischung von 40 g Styrol und 160 g Butadien aufpolymerisiert und die Reaktion bei 60°C 3 h fortgesetzt. Das isolierte Polymerisat wurde wie folgt charakterisiert:

Viskositätszahl (VZ): 146 [ml/g]

Aus dem Vergleich der GPC-Diagramme sieht man, daß die Monomermischung in der zweiten Polymerisationsstufe fast ausschließlich auf das lineare, nicht gekuppelte Polymerisat aus Stufe 1 aufpolymerisiert ist

Molekulargewicht (Peakmolgewicht) des linearen Copolymerisats : 120 000

Molekulargewicht (Peakmolgewicht) des gekuppelten Copolymerisats : 240 000

Vergleichsversuch B

Es wird wie in Beispiel 1 ein lineares Copolymerisat folgender Zusammensetzung hergestellt:

Rezeptur:

3000 ml Cyclohexan

3,6 g Tetrahydrofuran

2,5 mmol sek.-Butyllithium

20 g Styrol

als Mischung

80 g Butadien

Charakterisierung des gebildeten linearen Copolymerisats:

Molekulargewicht ( $\overline{m}_w$): 39 200

Viskositätszahl (VZ): 65 [ml/g]

Kupplung: 3 Äquivalente Divinylbenzol/Li verdünnt in 100 ml Cyclohexan

Charakterisierung des gekuppelten Produkts:

Viskositätszahl (VZ) : 133 [ml/g]

Molekulargewicht (Peakmolgewicht): 267 000

Kupplungsausbeute : 80 %

In einer weiteren Verfahrensstufe wird nochmals eine Mischung aus 20 g Styrol und 80 g Butadien in das Reaktionsgefäß eingespeist. Die Reaktion wird noch 3 h bei 60°C fortgesetzt, das Polymerisat gefällt und isoliert.

Das gebildete Polymerisat kann aufgrund fortgeschrittener Vernetzungen (Gelanteile) zunächst nicht weiter charakterisiert werden. Nach Abtrennung der Gelanteile wurde an den Polymerisat eine Viskositätszahl (VZ) von 145 [ml/g] gemessen.

Aus den Beispielen geht hervor:

1. daß bei einem Verhältnis von 1 Äquivalent DVB/Li die Kupplungsausbeute von 55 % (Vergleichsbeispiel A) auf 92 % erhöht wird (Beispiel 2), wenn das Kupplungsmittel DVB in Mischung mit Styrol angewendet wird.

2. daß bei Verwendung einer Mischung aus DVB und Styrol im Kupplungsschritt gekuppelte Polymerisate mit niedrigerem mittleren Molekulargewicht (geringer Sternastzahl) gebildet werden, als bei ausschließlicher Verwendung von reinem Divinylbenzol.

3. daß das Aufpolymerisieren weiterer Monomerer auf ein sternförmig gekuppeltes Polymerisat ohne das Auftreten von Gelanteilen vorteilhaft ausgeführt werden kann, wenn die Menge an Divinylbenzol/Li ungefähr 1:1 und Divinylbenzol in Mischung mit Styrol zur Kupplung eingesetzt wird.

Beispiel 4

In einem Rührkolben wurden unter Stickstoffatmosphäre 2 500 ml Cyclohexan und 294 ml Styrol (268 g; 2,57 mol) bei 40°C vorgelegt und bis zum Farbumschlag nach hellgelb mit 0,1 N s-BuLi-Lösung zum Entfernen reaktiver Verunreinigungen austitriert. Der Polymerisationsstart erfolgte anschließend durch Zugabe von 1,44 ml 1,45 N s-BuLi-Lösung (2,1 mmol). Nach 30 min. Rühren bei 40-45°C wurden weitere 8,0 ml 1,45 N s-BuLi-Lösung (11,6 mmol) und 178 ml Styrol (162 g; 1,56 mol) zugegeben und 20 min. bei 60°C gerührt. In einer dritten Stufe wurde dann bei 60°C eine Mischung aus 273 ml Butadien (177 g; 3,29 mol) und 43 ml Styrol (39 g; 0,38 mol) in 1,5 Stunden auspolymerisiert. Danach wurde eine Probe von ca. 5 ml gezogen. Die Kupplung zu Sternpolymeren erfolgte durch Zutropfen einer Mischung aus 3,7 ml DVB (25,9 mmol), 31,0 ml Styrol (28,2 g; 0,27 mol) und 100 ml Cyclohexan bei 80°C innerhalb von 20 min. Danach wurde noch 20 min. nachgerührt und dann mit Alkohol abgebrochen. Die Zwischenprobe und die Hauptmenge wurden durch Fällen aus Alkohol und anschließende Trocknung bei 50°C im Vakuum getrocknet.

```
VZ (Zwischenprobe)    =  62,2 [ml/g] (Viskositätszahl analog
   (ungekuppelt)                      DIN 53 726)
VZ (gekuppelt)        = 124,1 [ml/g] (")
```

Kopplungsausbeute: 92 %

Beispiel 5

wie Beispiel 4, außer:
    a) BuLi 1 : 2,6 ml 1,35 N = 3,5 mmol
    b) BuLi 2 : 13,0 ml 1,35 N = 17,6 mmol
    c) in Polystufe 3: 273 ml Bd + 28 ml Styrol (25,5 g; 0,25 mol)
    d) Kupplung : 5,55 ml DVB (38,9 mmol) + 46 ml Styrol (42 g; 0,40 mol) + 50 ml CH
VZ (ungekuppelt) = 40,8 [ml/g]
VZ (gekuppelt) = 82,2 [ml/g]
Kopplungsausbeute: 94 %

Beispiel 6

wie Beispiel 5, außer:
    a) in Polystufe 3: 273 ml Bd + 46 ml Styrol (0,40 mol; 42 g)
    b) Kupplung : 5,55 ml DVB (38,9 mmol) + 28 ml Styrol
(25,5 g; 0,25 mol) + 72 ml CH
VZ (ungekuppelt) = 46,2 [ml/g]
VZ (gekuppelt) = 89,1 [ml/g]
Kupplungsausbeute: 94 %

Vergleichsversuch C

Der Vergleichsversuch C wurde mit folgenden Ausnahmen exakt wie Beispiel 4 durchgeführt:
    a) In der dritten Polymerisationsstufe wurden 273 ml Butadien und 74 ml Styrol (67,3 g; 0,65 mol) polymerisiert und
    b) die Kupplung erfolgte mit 2,4 ml Edenol (Polyepoxiverbindung, Fa. Henkel, Epoxisauerstoff 4,5)
VZ (ungekuppelt) = 55,2 [ml/g]
VZ (gekuppelt) = 83,1 [ml/g]

Vergleichsversuch D

wie Beispiel 5, außer
    a) in der dritten Polystufe: 273 ml Bd + 74 ml Styrol (67,3 g; 0,65 mol)
    b) Kupplung mit : 5,55 ml DVB, kein Styrol, kein CH,
Zugabe auf einmal, nachrühren 20 min.
VZ (ungekuppelt): 42,3 [ml/g]
VZ (gekuppelt): 69,0 [ml/g]
Kupplungsausbeute: 78 %

Vergleichsbeispiel E

wie Beispiel 5, außer:

a) Kupplung: ; 5,55 ml DVB + 46 ml Styrol + 50 ml CH
Zugabe auf einmal + 20 min. nachrühren
Kopplungsausbeute: 90 %
VZ (ungekuppelt) = 45,8 [ml/g]
VZ (gekuppelt) = 83,4 [ml/g]


Beispiele 7 - 11

Die selektive Hydrierung der Copolymerisate aus Beispiel 1 und 4, sowie aus Vergleichsbeispiel A (auf der Stufe des einfach gekuppelten Polymeren) und Vergleichsbeispiel C und D erfolgte unter identischen Bedingungenund Vergleichsbeispiel C und D erfolgte unter identischen Bedingungen
durch Zugabe einer Katalysatorlösung aus 1,4 g Nickel-(II)-acetylacetonat gelöst in 80 ml Toluol und versetzt mit 30 ml einer 20 gew.%igen Lösung von Aluminiumtriisobutyl in Hexan. *
Der Hydrierreaktor wird mit 15 bar Wasserstoffdruck beaufschlagt und die Temperatur auf 80 - 90°C gehalten.
Dem Reaktor wurden nach 45,90,180 und 360 min. Probemengen entnommen. Der Gehalt an olefinischen Doppelbindungen wurde durch Auswertung der IR-Spektren ermittelt. Der Restdoppelbindungsgehalt in % (Tabelle 1) ist jeweils auf 100 % im nicht hydrierten Ausgangspolymeren bezogen.

### Tabelle 1

|  |  | Restdoppelbindungsgehalt in (%) nach: | | | |
|---|---|---|---|---|---|
|  |  | 45 | 90 | 180 | 360 min |
| 7. | Polymer aus Bsp. 1 | 51 | 13 | 6 | < 3 |
| 8. | " " Vergl.Bsp. A | 68 | 35 | 25 | 14 |
| 9. | " " Bsp. 4 | 47 | 11 | 4 | < 3 |
| 10. | " " Vergl.Bsp. C | 72 | 43 | 28 | 22 |
| 11. | " " Vergl.Bsp. D | 62 | 38 | 18 | 9 |

Wie die Versuche 7 - 11 eindeutig zeigen, lassen sich die Polymerisate, die nach Verfahrensanspruch 4 und 5 gekuppelt wurden, wesentlich leichter hydrieren.


## Ansprüche

1. Sternförmig verzweigtes Copolymerisat aus vinylaromatischen Kohlenwasserstoffen und konjugierten Dienen, hergestellt durch anionische Lösungspolymerisation der Monomeren mittels alkalimetallorganischer Initiatoren und anschließende Kupplung mit einem polyvinylaromatischen Kohlenwasserstoff als polyfunktionellem Kupplungsmittel, dadurch gekennzeichnet, daß als Kupplungsmittel ein Gemisch aus polyvinylaromatischem Kohlenwasserstoff und einem monovinylaromatischen Kohlenwasserstoff verwendet worden ist, in dem das Gewichtsverhältnis von monovinylaromatischem Kohlenwasserstoff zu polyvinylaromatischem Kohlenwasserstoff größer als oder gleich 7:1 und kleiner als 60:1 war.

2. Copolymerisat nach Anspruch 1, dadurch gekennzeichnet, daß das Gewichtsverhältnis größer als oder gleich 10:1 und kleiner als 40:1 war.

3. Copolymerisat, dadurch gekennzeichnet, daß es aus einem Copolymerisat nach Anspruch 1 durch partielle oder vollständige Hydrierung erhalten wurde.

4. Verfahren zur Herstellung sternförmig verzweigter Copolymerisate nach Anspruch 1, dadurch gekennzeichnet, daß nach praktisch vollständigem Umsatz der Monomeren die erhaltenen linearen, aktive, endständige Lithium-Kohlenstoffbindungen aufweisenden Copolymerisate unter Zusatz einer Mischung aus

* Katalysatoreinsatzmenge    bezogen    auf    jeweils    1000    g Polymer monovinylaromatischem Kohlenwasserstoff und polyvinylaromatischem Kohlenwasserstoff gekuppelt werden, wobei das Gewichtsverhältnis von monovinylaromatischem Kohlenwasserstoff zu polyvinylaromatischem Kohlenwasserstoff größer als oder gleich 7:1 und kleiner als 60:1 ist und wobei diese Mischung unverdünnt oder verdünnt mit einem Lösungsmittel über einen längeren Zeitraum kontinuierlich oder in mehreren Teilmengen zudosiert wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 340 959  (SHELL) *Ansprüche 1-5,11,17,26; Seite 9, Zeilen 15-35; Seite 10, Zeilen 18-28; Seite 6, Zeilen 2-16 * & US-A-4 116 917 (Kat. D); & DE-A-27 00 294 (Kat. D) | 1-4 | C 08 F 297/04 C 08 G 81/02 |
| A | US-A-4 346 193  (WARFEL) * Spalte 4, Zeilen 27-41 * | 1 | |
| A | FR-A-2 145 211  (STAMICARBON) | | |

RECHERCHIERTE SACHGEBIETE (Int. Cl.4)

C 08 F
C 08 G

Der vorliegende Recherchenbericht wurde für alle Patentansprüche erstellt

| Recherchenort | Abschlußdatum der Recherche | Prüfer |
|---|---|---|
| DEN HAAG | 30-01-1989 | MEULEMANS R.A.M.G.G. |